(19) Europäisches Patentamt
European Patent Office
Office européen des brevets

(11) Publication number: **0 052 398**
**B1**

(12) # EUROPEAN PATENT SPECIFICATION

(45) Date of publication of patent specification: **15.02.84**

(51) Int. Cl.³: **C 09 K 11/475**

(21) Application number: **81201223.5**

(22) Date of filing: **30.10.81**

(54) **Luminescent screen and low-pressure mercury vapour discharge lamp comprising such a screen.**

(30) Priority: **14.11.80 NL 8006223**

(43) Date of publication of application:
**26.05.82 Bulletin 82/21**

(45) Publication of the grant of the patent:
**15.02.84 Bulletin 84/7**

(84) Designated Contracting States:
**BE DE FR GB IT NL**

(56) References cited:
EP - A - 0 021 536
FR - A - 1 522 322
FR - A - 2 089 918
FR - A - 2 419 313
US - A - 3 634 281

(73) Proprietor: **N.V. Philips' Gloeilampenfabrieken**
**Groenewoudseweg 1**
**NL-5621 BA Eindhoven (NL)**

(72) Inventor: **de Hair, Johannes Theodorus Wilhelmus**
**c/o INT. OCTROOIBUREAU B.V. Prof. Holstlaan 6**
**NL-5656 AA Eindhoven (NL)**

(74) Representative: **Evers, Johannes Hubertus Marie et al,**
**INTERNATIONAAL OCTROOIBUREAU B.V Prof. Holstlaan 6**
**NL-5656 AA Eindhoven (NL)**

**EP 0 052 398 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Luminescent screen and low-pressure mercury vapour discharge lamp comprising such a screen

The invention relates to a luminescent screen comprising a luminescent material which has been activated by lead or by lead and at least one of the elements terbium and manganese, the material having the hexagonal apatite crystal structure and a composition which is defined by the general formula $Me_aLn_b(AO_4)_6X_2$, wherein Me represents at least one of the elements Ca, Sr, Ba, Mg and Zn, Me having partly been replaced by Pb or by Pb and Mn, wherein Ln represents at least one of the elements Y and La, the Tb, if present, replacing a portion of the Ln, wherein $(AO_4)$ represents at least one anion of the group $(PO_4)^{3-}$, $(SiO_4)^{4-}$ and $(BO_4)^{5-}$, and X at least one element of the group of oxygen, the halogens and vacancies, and wherein $a \neq 0$, $b \neq 0$ and $9 \leqslant a + b \leqslant 10$. In addition, the invention relates to a low-pressure mercury vapour discharge lamp comprising such a luminescent screen.

From EP—A—0 021 536 luminescent silicates of alkaline earth metals and of Y and/or La are known, the host lattices of which have triclinic crystal structure, for example $Sr_3La_2Si_6O_{18}$.

Luminescent silicates of an alkaline earth metal and of Y and/or La are known from NL—A—7005708, which silicates have the apatite crystal structure. More specifically, the said publication describes Pb and also Pb and Mn-activated silicates which are defined by the above-mentioned general formula, for example $Me_2Ln_8\ (SiO_4)_6O_2$. NL—A—7104263 describes such silicates in which a portion of the $(SiO_4)^{4-}$ is replaced by $(PO_4)^{3-}$.

The publication NL—A—7802632 discloses luminescent materials which are activatee by gadolinium and which furthermore comprise second and third activator elements. In these materials the excitation energy, for example the short-wave ultraviolet radiation of a low-pressure mercury vapour discharge is absorbed by the second activator element and transferred to the third activator element *via* gadolinium ions, which enables efficient emission of the third activator element. This publication mentions as an example of such a material a lead and terbium-activated, gadolinium-containing lanthanum silicate with an apatite crystal structure. This known silicate contains as cations only Ln-ions and no Me-ions and therefore does not satisfy the general formula specified in the preamble. It has appeared that the known silicate has a comparatively low quantum efficiency (not more than 50%).

It is an object of the invention to provide novel luminescent materials on the basis of a host lattice with an apatite crystal structure.

According to the invention, a luminescent screen of the type defined in the opening paragraph is characterized in that the luminescent material contains gadolinium, the Gd replacing at least partly the Ln.

It has been found that on activation by both Pb and Gd, the apatites which contain Me (Ca, Sr, Ba, Mg and/or Zn) and Ln (Y and/or La) form efficiently luminescing materials which, for example on excitation by ultraviolet radiation from a low-pressure mercury vapour discharge, yield in a very efficient manner the characteristic Gd-radiation (line emission in the range from 310—315 nm). In addition, it has appeared that if terbium or manganese are used as an activator in addition to the lead and the gadolinium, efficiently luminesiing materials are obtained having the characteristic green Tb-emission and the Mn-band emission with a maximum at approximately 590 nm, respectively. From experiments it appeared that both the phosphate and also the silicate apatites and also the borate-containing and the mixed apatites form suitable host lattices. These host lattices may be either oxy- or halogen-apatites (X representing oxygen or a halogen, F in particular) or mixed oxy-halogen apatites. X may alternatively represent an unoccupied host lattice (vacancy). In addition to the stoichiometric apatites (wherein $a + b = 10$ and which do not have vacancies X) it has appeared that also non-stoichiometric materials ($9 \leqslant a + b \leqslant 10$) form good host lattices. It is a condition that the luminescent materials always comprise Me and Ln ($a \neq 0$, $b \neq 0$).

In the luminescent materials of the invention the excitation energy is absorbed by the lead and transferred to the gadolinium. If furthermore Tb and/or Mn are present, a further, efficient transfer to the said last elements occurs. A great advantage of the materials in accordance with the invention is that the transfer of excitation energy from the lead is so complete that the materials are substantially free from residual emission from the lead in the visible part of the spectrum. This is in contrast with the materials already known from the said NL—A—7005708 and NL—A—7104263 mentioned in the foregoing, and was completely unexpected.

The luminescent materials in accordance with the invention are particularly suitable for use in the luminescent screen of low-pressure mercury vapour discharge lamps, as the mercury resonant radiation (predominantly 254 nm) generated in these lamps can be well absorbed by the lead.

Generally, preference is given to luminescent materials in accordance with the invention on the basis of a stoichiometric host lattice (this is to say in the general formula $a + b = 10$), as the highest luminous fluxes can usually be obtained with such materials.

A first embodiment of a luminescent screen in accordance with the invention is characterized in that the luminescent material has a composition which is defined by the formula

$$Me_{10-y-p-q}Pb_pMn_qLn_{y-r-s}Gd_rTb_s(PO_4)_{6-y}(SiO_4)_yF_2,$$

wherein

$0.25 \leqslant y \leqslant 6$
$0.002 \leqslant p \leqslant 1.00$
$0 \leqslant q \leqslant 0.25$
$0.25 \leqslant r$
$0 \leqslant s \leqslant 3.0$
$r + s \leqslant y$

Such a screen comprises fluoro-silicate apatite which may possibly contain phosphate and is stoichiometric (in the general formula: $a + b = 10$).

A second embodiment of a luminescent screen in accordance with the invention, which also comprises a stoichiometric apatite, is characterized in that the luminescent material has a composition defined by the formula

$$Me_{2+x-y-p-q}Pb_pMn_qLn_{8-x+y-r-s}Gd_rTb_s(SiO_4)_{6-x-y}(PO_4)_x(BO_4)_yO_2,$$

wherein

$0 \leqslant x \leqslant 6$
$0 \leqslant y \leqslant 6 - x$, if $2 < x \leqslant 6$
$0 \leqslant y < 2 + x$, if $0 \leqslant x \leqslant 2$
$0.002 \leqslant p \leqslant 1.00$
$0 \leqslant q \leqslant 0.25$
$p + q < 2 + x - y$
$0.25 \leqslant r$
$0 \leqslant s \leqslant 3.0$
$r + s \leqslant 8 - x + y$.

These luminescent materials are oxy-, silicate- and/or phosphate-apatites, which may furthermore contain borate. They are very efficient materials with a high quantum efficiency at short-wave UV-excitation, particularly if the materials do not contain borate. Preference is therefore given to those materials for which it holds that $y = 0$.

An embodiment of a screen in accordance with the invention which contains a non-stoichiometric apatite and with which high luminous fluxes can also be obtained, is characterized in that the luminescent material has a composition defined by the formula

$$Me_{1-p-q}Pb_pMn_qLn_{8-r-s}Gd_rTb_s(SiO_4)_{6-x-y}(PO_4)_x(BO_4)_yF_{2-2c-x+y}\ O_{c+x-y},$$

wherein

$0 \leqslant x \leqslant 2$
$0 \leqslant y \leqslant 2$
$0 \leqslant c \leqslant 1 - \frac{1}{2}x + \frac{1}{2}y$
$0.002 \leqslant p \leqslant 1.00$
$0 \leqslant q \leqslant 0.25$
$p + q \leqslant 1$
$0.25 \leqslant r$
$0 \leqslant s \leqslant 3.0$
$r + s \leqslant 8$.

More specifically, the fluoro-silicate-apatites having as host lattice $MeLn_8(SiO_4)F_2$ appear to be very satisfactory.

A still further embodiment of a luminescent screen in accordance with the invention is characterized in that the luminescent material has a composition defined by the formula

$$Me_{3-p-1}Pb_pMn_qLn_{6-r-s}Gd_rTb_s(SiO_4)_{6-x}(PO_4)_xF_{4-2c-x}O_{c+x-2},$$

wherein

$0 \leqslant x \leqslant 4$
$2 - x \leqslant c \leqslant 2 - \frac{1}{2}x$
$0 \leqslant c$
$0.002 \leqslant p \leqslant 1.00$
$0 \leqslant q \leqslant 0.25$
$0.25 \leqslant r$
$0 \leqslant s \leqslant 3.0$
$r + s \leqslant 6$.

Also this screen comprises a non-stoichiometric apatite (in the general formula $a + b = 9$). Of this group of apatites, the silicates ($x = 0$) having as host lattice $Me_3Ln_6(SiO_4)_6$ in particular appear to furnish high luminous fluxes.

Embodiments of luminescent materials suitable for a luminescent screen in accordance with the invention will now be further described with reference to a drawing and a number of examples for the preparation of these materials.

In the drawing

Figure 1 shows a low-pressure mercury vapour discharge lamp in accordance with the invention, and

Figure 2 shows the spectral energy distribution of the emission of a Pb and Gd-activated material in accordance with the invention,

Figure 3 shows the emission spectrum of a material activated by Pb, Gd and Tb, and

Figure 4 shows the emission spectrum of a material activated by Pb, Gd and Mn.

Figure 1 shows schematically and in cross-section a low-pressure mercury vapour discharge lamp having a tubular glass wall 1. Electrodes 2 and 3 are placed, one at each end of the lamp, the discharge being maintained between these electrodes during operation of the lamp. The lamp contains a small quantity of mercury and a rare gas as a starting gas. The wall 1 is coated on its inside surface with a luminescent layer 4 constitutes a luminescent screen which layer 4 comprises a luminescent material in accordance with the invention. The layer 4 can be applied to the wall 1 in a customary manner, for example by means of a suspension which contains the luminescent material.

Example 1

A mixture is made of

0.502 g $CaCO_3$
0.414 g $CaF_2$
0.112 g $PbO$
1.418 g $SrCO_3$
3.666 g $La_2O_3$
1.359 g $Gd_2O_3$
2.118 g $SiO_2$.

This mixture which furthermore contains 2% by weight of $NH_4F$ was heated for 1 hour in air at 1350°C. The product obtained was homogenized whilst 10% by weight $NH_4Cl$ was added and thereafter subjected to a second heating operation for 1 hour in air at 1250°C. After cooling and homogenizing, a lead and gadolinium-activated fluoro-apatite was obtained having a composition defined by the formula $Ca_2Sr_{1.9}Pb_{0.1}La_{4.5}Gd_{1.5}(SiO_4)_6F_2$. The apatite crystal structure (also of all the following examples of materials in accordance with the invention) was determined by means of X-ray diffraction analysis. On excitation by short-wave ultraviolet radiation (predominantly 254 nm) the material shows the characteristic Gd-line emission (maximum 312 nm). Figure 2 shows the spectral energy distribution of the emission. In this Figure the wave length $\lambda$ in nm is plotted on the horizontal axis and the relative radiation intensity on the vertical axis in arbitrary units. This material had a quantum efficiency of 70%, the absorption A of the exciting radiation (254 nm) being 82%. The peak height P of the Gd-Emission was 88% relative to a standard material ($Gd_{0.5}La_{0.487}Bi_{0.013}B_3O_6$).

Examples 2 to 12 inclusive

In a corresponding manner as specified in Example 1, a number of lead and gadolinium-activated fluoro-silicate apatites of different compositions were obtained. The formulae of these materials as well as the results of measuring the peak height P of the Gd-line emission (in % relative to the standard mentioned in Example 1) and of the absorption A (in %) of the exciting 254 nm-radiation are shown in the following Table.

| Example | Formula | P | A |
|---|---|---|---|
| 2 | $Ca_{1.9}Sr_2Pb_{0.1}La_{5.9}Gd_{0.1}(SiO_4)_6F_2$ | 66 | 83 |
| 3 | $Ca_{1.9}Sr_2Pb_{0.1}La_5Gd(SiO_4)_6F_2$ | 80 | 82 |
| 4 | $Ca_2Sr_{1.9}Pb_{0.1}La_5Gd(SiO_4)_6F_2$ | 83 | 83 |
| 5 | $Ca_2Sr_{1.9}Pb_{0.1}La_4Gd_2(SiO_4)_6F_2$ | 81 | 86 |
| 6 | $Ca_2Sr_{1.9}Pb_{0.1}La_{3.5}Gd_{2.5}(SiO_4)_6F_2$ | 66 | 86 |
| 7 | $Ca_2Sr_{1.9}Pb_{0.1}La_3Gd_3(SiO_4)_6F_2$ | 50 | 86 |
| 8 | $Ca_2Sr_{1.9}Pb_{0.1}La_{2.5}Y_{2.5}Gd(SiO_4)_6F_2$ | 75 | 88 |
| 9 | $Ca_2Sr_{1.9}Pb_{0.1}La_{2.25}Y_{2.25}Gd_{1.5}(SiO_4)_6F_2$ | 83 | 86 |
| 10 | $Ca_2Sr_{1.9}Pb_{0.1}La_2Y_2Gd_2(SiO_4)_6F_2$ | 80 | 88 |
| 11 | $Ca_2Sr_{1.9}Pb_{0.1}La_{1.75}Y_{1.75}Gd_{2.5}(SiO_4)_6F_2$ | 62 | 88 |
| 12 | $Ca_2Sr_{1.9}Pb_{0.1}La_{1.5}Y_{1.5}Gd_3(SiO_4)_6F_2$ | 42 | 87 |

Examples 13 to 40, inclusive

In a similar manner to that described in Example 1, a number of fluoro-silicate apatites, activated by lead, gadolinium and terbium were prepared, the temperature being however 1330°C during the first heating operation, and cooling after the heating operation being effected in a nitrogen atmosphere. The materials obtained all showed the characteristic green Tb-emission. The following Table shows the formulae of these materials and, in addition, the measurements of the luminous efficacy LO (in % relative to a Tb-activated cerium magnesium aluminate which was used as a standard) and the absorption A (in %) of the exciting radiation (predominantly 254 nm).

| Example | Formula | LO | A |
|---|---|---|---|
| 13 | $Ca_2Sr_{1.9}Pb_{0.1}Y_{0.8}Gd_5Tb_{0.2}(SiO_4)_6F_2$ | 73 | 88 |
| 14[a)] | $Ca_2Sr_{1.9}Pb_{0.1}Y_{0.6}Gd_5Tb_{0.4}(SiO_4)_6F_2$ | 80 | 89 |
| 15 | $Ca_2Sr_{1.9}Pb_{0.1}Y_{0.4}Gd_5Tb_{0.6}(SiO_4)_6F_2$ | 80 | 89 |
| 16 | $Ca_2Sr_{1.9}Pb_{0.1}Y_{0.2}Gd_5Tb_{0.8}(SiO_4)_6F_2$ | 79 | 89 |
| 17 | $Ca_2Sr_{1.9}Pb_{0.1}Y_{1.8}Gd_4Tb_{0.1}(SiO_4)_6F_2$ | 74 | 88 |
| 18 | $Ca_2Sr_{1.9}Pb_{0.1}Y_{1.6}Gd_4Tb_{0.4}(SiO_4)_6F_2$ | 78 | 88 |
| 19 | $Ca_2Sr_{1.9}Pb_{0.1}Y_{1.4}Gd_4Tb_{0.6}(SiO_4)_6F_2$ | 79 | 89 |
| 20 | $Ca_2Sr_{1.9}Pb_{0.1}Y_{1.2}Gd_4Tb_{0.8}(SiO_4)_6F_2$ | 79 | 89 |
| 21 | $Ca_2Sr_{1.9}Pb_{0.1}Y_{2.8}Gd_3Tb_{0.2}(SiO_4)_6F_2$ | 72 | 87 |
| 22 | $Ca_2Sr_{1.9}Pb_{0.1}Y_{2.6}Gd_3Tb_{0.4}(SiO_4)_6F_2$ | 77 | 88 |
| 23 | $Ca_2Sr_{1.9}Pb_{0.1}Y_{2.4}Gd_3Tb_{0.6}(SiO_4)_6F_2$ | 75 | 88 |
| 24 | $Ca_2Sr_{1.9}Pb_{0.1}Y_{2.2}Gd_3Tb_{0.8}(SiO_4)_6F_2$ | 77 | 89 |
| 25 | $Ca_2Sr_{1.9}Pb_{0.1}Y_{3.8}Gd_2Tb_{0.2}(SiO_4)_6F_2$ | 69 | 87 |
| 26 | $Ca_2Sr_{1.9}Pb_{0.1}Y_{3.6}Gd_2Tb_{0.4}(SiO_4)_6F_2$ | 75 | 89 |
| 27 | $Ca_2Sr_{1.9}Pb_{0.1}Y_{3.4}Gd_2Tb_{0.6}(SiO_4)_6F_2$ | 76 | 89 |
| 28 | $Ca_2Sr_{1.9}Pb_{0.1}Y_{3.2}Gd_2Tb_{0.8}(SiO_4)_6F_2$ | 78 | 89 |
| 29 | $Ca_2Sr_{1.95}Pb_{0.05}Gd_{5.5}Tb_{0.5}(SiO_4)_6F_2$ | 73 | 84 |
| 30 | $Ca_2Sr._{1.93}Pb_{0.07}Gd_{5.5}Tb_{0.5}Tb_{0.5}(SiO_4)_6F_2$ | 75 | 85 |
| 31 | $Ca_2Sr_{1.91}Pb_{0.09}Gd_{5.5}Tb_{0.5}(SiO_4)_6F_2$ | 77 | 86 |
| 32 | $Ca_2Sr_{1.89}Pb_{0.11}Gd_{5.5}Tb_{0.5}(SiO_4)_6F_2$ | 77 | 89 |
| 33 | $Ca_2Sr_{1.87}Pb_{0.13}Gd_{5.5}Tb_{0.5}(SiO_4)_6F_2$ | 79 | 90 |
| 34 | $Ca_2Sr_{1.85}Pb_{0.15}Gd_{5.5}Tb_{0.5}(SiO_4)_6F_2$ | 78 | 91 |
| 35 | $Ca_2Sr_{1.9}Pb_{0.1}La_{2.5}Gd_3Tb_{0.5}(SiO_4)_6F_2$ | 72 | 86 |
| 36 | $Ca_{3.9}Pb_{0.1}La_{2.5}Gd_3Tb_{0.5}(SiO_4)_6F_2$ | 70 | 83 |
| 37 | $Sr_{3.9}Pb_{0.1}La_{2.5}Gd_3Tb_{0.5}(SiO_4)_6F_2$ | 72 | 89 |
| 38 | $Ca_2Sr_{1.9}Pb_{0.1}Y_{2.5}Gd_3Tb_{0.5}(SiO_4)_6F_2$ | 78 | 87 |
| 39 | $Ca_{3.9}Pb_{0.1}Y_{2.5}Gd_3Tb_{0.5}(SiO_4)_6F_2$ | 76 | 86 |
| 40 | $Sr_{3.9}Pb_{0.1}Y_{2.5}Gd_3Tb_{0.5}(SiO_4)_6F_2$ | 73 | 89 |

a) The spectral energy distribution of the emission of the material in accordance with Figure 14 is shown in Figure 3.

Examples 41 to 45, inclusive

Five oxy-apatites activated by lead, gadolinium and manganese were prepared in a manner which substantially corresponded to the method described in Example 1. The Mn was added to the firing mix in the form of $MnCO_3$ and a portion of the Ca in the form of $CaHPO_4$. The first heating operation took place at 1325°C. The addition of $NH_4Cl$ prior to the second heating operation was omitted, and this second heating operation took place for 1½ hours at 1325°C, followed by cooling in a nitrogen atmosphere. The materials obtained luminesce in a band (half-value width approximately 75 nm) having a maximum at 590 nm. The following Table shows the formulae of these materials as well as the results of the measurement of peak height PH of the emission band (in % relative to the height of the Mn-band of a luminescent Sb and Mn-activated halo-phosphate having a colour temperature of 3000 K) and the absorption A (in %) of the exciting 254 nm-radiation.

| Example | Formula | PH | A |
|---|---|---|---|
| 41 | $Ca_{1.85}Pb_{0.15}Mn_{0.1}Y_{4.9}Gd_3(SiO_4)_{5.9}(PO_4)_{0.1}O_2$ | 100 | 87 |
| 42[a)] | $Ca_{1.9}Pb_{0.1}Mn_{0.1}Y_{4.9}Gd_3(SiO_4)_{5.9}(PO_4)_{0.1}O_2$ | 73 | 71 |
| 43 | $Ca_{3.3}Pb_{0.1}Mn_{0.1}Y_{3.5}Gd_3(SiO_4)_{4.5}(PO_4)_{1.5}O_2$ | 63 | 75 |
| 44 | $Ca_{1.8}Pb_{0.15}Mn_{0.15}Y_{4.9}Gd_3(SiO_4)_{5.9}(PO_4)_{0.1}O_2$ | 37 | 54 |
| 45[b)] | $Ca_{1.75}Pb_{0.15}Mn_{0.1}Y_6Gd_2(SiO_4)_4(PO_4)(BO_4)O_2$ | 52 | 81 |

a) The spectral energy distribution of the emission of the material in accordance with example 42 is shown in Figure 4.

b) Boron added as $H_3BO_3$. Duration of the second heating operation: 1 hour. A third heating operation took place, after the addition of 10% by weight of $NH_4Cl$, for 1 hour in air at 1325°C.

Examples 46 to 49, inclusive

The formulae of four examples of materials in accordance with the invention, also having $Mn^{2+}$-emission, are shown in the following Table, together with the measurement of peak height PH (in % relative to the standard mentioned in examples 41 to 45, inclusive).

| Example | Formula | PH |
|---|---|---|
| 46 | $Ca_{3.85}Pb_{0.15}Mn_{0.1}Y_{2.9}Gd_3(SiO_4)_{5.9}(PO_4)_{0.1}F_2$ | 68 |
| 47 | $Ca_{6.8}Pb_{0.1}Mn_{0.1}Gd_3(PO_4)_3(SiO_3)_3F_2$ | 57 |
| 48 | $Ca_{2.85}Pb_{0.15}Mn_{0.1}Y_{3.9}Gd_3(SiO_4)_{5.9}(PO_4)_{0.1}OF$ | 74 |
| 49 | $Mg_{3.8}Pb_{0.1}Mn_{0.1}Y_3Gd_3(SiO_4)_6O$ | 45 |

Examples 50 to 66, inclusive

A number of examples of luminescent materials in accordance with the invention which are not only activated by Pb and Gd but also by Tb (examples 50 to 65, inclusive) or by Mn (example 66) are shown in the following Table. The luminous efficacy LO of the Tb-activated materials is again shown in % relative to the standard mentioned in examples 13 to 40, inclusive. The examples 54 to 66, inclusive, relate to non-stoichiometric apatites ($a + b = 9$).

| Example | Formula | LO |
|---|---|---|
| 50 | $Zn_{1.9}Pb_{0.1}Y_5Gd_{2.5}Tb_{0.5}(SiO_4)_6O_2$ | 63 |
| 51 | $Sr_{0.9}Pb_{0.1}Y_{5.5}Gd_3Tb_{0.5}(SiO_4)_5(BO_4)O_2$ | 60 |
| 52 | $Ca_{0.9}Pb_{0.1}Y_{5.5}Gd_3Tb_{0.5}(SiO_4)_5(BO_4)O_2$ | 59 |
| 53 | $Mg_{0.9}Pb_{0.1}Y_{5.5}Gd_3Tb_{0.5}(SiO_4)_5(BO_4)O_2$ | 56 |
| 54 | $Sr_{0.9}Pb_{0.1}La_{4.5}Gd_3Tb_{0.5}(SiO_4)_6F_2$ | 64 |
| 55 | $Ca_{0.9}Pb_{0.1}La_{4.5}Gd_3Tb_{0.5}(SiO_4)_6F_2$ | 66 |
| 56 | $Ba_{0.9}Pb_{0.1}La_{4.5}Gd_3Tb_{0.5}(SiO_4)_6F_2$ | 58 |
| 57 | $Sr_{0.9}Pb_{0.1}Y_{4.5}Gd_3Tb_{0.5}(SiO_4)_6F_2$ | 66 |
| 58 | $Ca_{0.9}Pb_{0.1}Y_{4.5}Gd_3Tb_{0.5}(SiO_4)_6F_2$ | 69 |
| 59 | $Ba_{0.9}Pb_{0.1}Y_{4.5}Gd_3Tb_{0.5}(SiO_4)_6F_2$ | 60 |
| 60 | $Sr_{2.9}Pb_{0.1}La_{2.5}Gd_3Tb_{0.5}(SiO_4)_6$ | 44 |
| 61 | $Sr_{2.9}Pb_{0.1}Y_{2.5}Gd_3Tb_{0.5}(SiO_4)_6$ | 41 |
| 62 | $Sr_{2.9}Pb_{0.1}Gd_{5.5}Tb_{0.5}(SiO_4)_6$ | 48 |
| 63 | $Ca_{2.9}Pb_{0.1}La_{2.5}Gd_3Tb_{0.5}(SiO_4)_6$ | 32 |
| 64 | $Ca_{2.9}Pb_{0.1}Y_{2.5}Gd_3Tb_{0.5}(SiO_4)_6$ | 37 |
| 65 | $Ca_{2.9}Pb_{0.1}Gd_{5.5}Tb_{0.5}(SiO_4)_6$ | 37 |
| 66 | $Ca_{2.8}Pb_{0.1}Mn_{0.1}Y_3Gd_3(SiO_4)_6$ | a) |

a) Peak height of the $Mn^{2+}$-emission band 46% relative to the standard mentioned in the examples 41 to 45, inclusive.

## Claims

1. A luminescent screen comprising a luminescent material activated by lead or by lead and at least one of the elements terbium and magnanese, the material having the hexagonal apatite crystal structure and a composition which is defined by the general formula

$$Me_aLn_b(AO_4)_6X_2,$$

wherein Me represents at least one of the elements Ca, Sr, Ba, Mg and Zn, Me having partly been replaced by Pb or by Pb and Mn, wherein Ln represents at least one of the elements Y and La, the Tb, if present, replacing a portion of the Ln, wherein $(AO_4)$ represents at least one anion from the group $(PO_4)^{3-}$, $(SiO_4)^{4-}$ and $(BO_4)^{5-}$, and X at least one element from the group of oxygen, the halogens and vacancies, and wherein $a \neq 0$, $b \neq 0$ and $9 \leqslant a + b \leqslant 10$, characterized in that the luminescent materials contains gadolinium, the Gd at least partly replacing the Ln.

2. A luminescent screen as claimed in Claim 1, characterized in that the luminescent material has a composition defined by the formula

$$Me_{a-p-q}Pb_pMn_qLn_{b-r-s}Gd_rTb_s(AO_4)_6X_2$$

wherein

$0.002 \leqslant p \leqslant 1.0$
$0 \leqslant q \leqslant 0.25$
$0.25 \leqslant r \leqslant b - s$
$0 \leqslant s \leqslant 3.0.$

3. A luminescent screen as claimed in Claim 1 or 2, characterized in that the luminescent material has a composition defined by the formula

$$Me_{10-y-p-q}Pb_pMn_qLn_{y-r-s}Gd_rTb_s(PO_4)_{6-y}(SiO_4)_yF_2,$$

wherein

$0.25 \leqslant y \leqslant 6$
$0.002 \leqslant p \leqslant 1.00$
$0 \leqslant q \leqslant 0.25$
$0.25 \leqslant r$
$0 \leqslant s \leqslant 3.0$
$r + s \leqslant y.$

4. A luminescent screen as claimed in Claim 1 or 2, characterized in that the luminescent material has a composition defined by the formula

$$Me_{2+x-y-p-q}Pb_pMn_qLn_{8-x+y-r-s}Gd_rTb_s(SiO_4)_{6-x-y}(PO_4)_x(BO_4)_yO_2,$$

wherein

$0 \leqslant x \leqslant 6$
$0 \leqslant y \leqslant 6 - x$, if $2 < x \leqslant 6$
$0 \leqslant y < 2 + x$, if $0 \leqslant x \leqslant 2$
$0.002 \leqslant p \leqslant 1.00$
$0 \leqslant q \leqslant 0.25$
$p + q < 2 + x - y$
$0.25 \leqslant r$
$0 \leqslant s \leqslant 3.0$
$r + s \leqslant 8 - x + y.$

5. A luminescent screen as claimed in Claim 4, characterized in that $y = 0$.

6. A luminescent screen as claimed in Claim 1 or 2, characterized in that the luminescent material has a composition defined by the formula

$$Me_{1-p-q}Pb_pMn_qLn_{8-r-s}Gd_rTb_s(SiO_4)_{6-x-y}(PO_4)_x(BO_4)_yF_{2-2c-x+y}\,O_{c+x-y},$$

wherein

$0 \leqslant x \leqslant 2$
$0 \leqslant y \leqslant 2$
$0 \leqslant c \leqslant 1 - \frac{1}{2}x + \frac{1}{2}y$
$0.002 \leqslant p \leqslant 1.00$
$0 \leqslant q \leqslant 0.25$
$p + q \leqslant 1$
$0.25 \leqslant r$
$0 \leqslant s \leqslant 3.0$
$r + s \leqslant 8.$

7. A luminescent screen as claimed in Claim 1 or 2, characterized in that the luminescent material has a composition defined by the formula

$$Me_{3-p-q}Pb_pMn_qLn_{6-r-s}Gd_rTb_s(SiO_4)_{6-x}(PO_4)_xF_{4-2c-x}O_{c+x-s},$$

wherein

$0 \leqslant x \leqslant 4$
$2 - x \leqslant c \leqslant 2 - \frac{1}{2}x$
$0 \leqslant c$
$0.002 \leqslant p \leqslant 1.00$
$0 \leqslant q \leqslant 0.25$
$0.25 \leqslant r$
$0 \leqslant s \leqslant 3.0$
$r + s \leqslant 6.$

8. A low-pressure mercury vapour discharge lamp comprising a luminescent screen as claimed in one or more of the Claims 1 to 7.

**Revendications**

1. Ecran luminescent muni d'une substance luminescente activée à l'aide de plomb ou de plomb et d'au moins l'un des éléments terbium et manganèse, la substance présentant la structure cristalline hexagonale d'apatite et une composition qui est définie par la formule générale $Me_aLn_b(AO_4)_6X_2$, formule dans laquelle Me représente au moins l'un des éléments Ca, Sr, Ba, Mg et Zn, Me étant remplacé partiellement par Pb ou par Pb et Mn, dans laquelle Ln représente au moins l'un des éléments Y et La, le Tb, s'il est présent, replaçant une partie du Ln, dans laquelle $(AO_4)$ représente au moins un anion du groupe $(PO_4)^{3-}$, $(SiO_4)^{4-}$ et $(BO_4)^{5-}$, et X au moins un élément du groupe de l'oxygène, des halogènes et des lacunes, et dans laquelle $a \neq 0$, $b \neq 0$ et $9 \leqslant a + b \leqslant 10$, caractérisé en ce que les substances luminescentes contiennent du gadolinium, le Gd remplaçant au moins partiellement le Ln.

2. Ecran luminescent selon la revendication 1, caractérisé en ce que la substance luminescente présente une composition définie par la formule

$$Me_{a-p-q}Pb_pMn_qLn_{b-r-s}Gd_rTb_s(AO_4)_6X_2$$

dans laquelle

$0{,}002 \leqslant p \leqslant 1.0$
$0 \leqslant q \leqslant 0.25$
$0{,}25 \leqslant r \leqslant b - s$
$0 \leqslant s \leqslant 3{,}0$.

3. Ecran luminescent selon la revendication 1 ou 2, caractérisé en ce que la substance luminescente présente une composition définie par la formule

$$Me_{10-y-p-q}Pb_pMn_qLn_{y-r-s}Gd_rTb_s(PO_4)_{6-y}(SiO_4)_yF_2,$$

dans laquelle

$0{,}25 \leqslant y \leqslant 6$
$0{,}002 \leqslant p \leqslant 1{,}00$
$0 \leqslant q \leqslant 0{,}25$
$0{,}25 \leqslant r$
$0 \leqslant s \leqslant 3{,}0$
$r + s \leqslant y$

4. Ecran luminescent selon la revendication 1 ou 2, caractérisé en ce que la substance luminescente présente une composition définie par la formule

$$Me_{2+x-y-p-q}Pb_pMn_qLn_{8-x+y-r-s}Gd_rTb_s(SiO_4)_{6-x-y}(PO_4)_x(BO_4)_yO_2,$$

dans laquelle

$0 \leqslant x \leqslant 6$
$0 \leqslant y \leqslant 6 - x$, si $2 < x \leqslant 6$
$0 \leqslant y < 2 + x$, si $0 \leqslant x \leqslant 2$
$0{,}002 \leqslant p \leqslant 1{,}00$
$0 \leqslant q \leqslant 0{,}25$
$p + q \leqslant 2 + x - y$
$0{,}2 \leqslant r$
$0 \leqslant s \leqslant 3{,}0$
$r + s \leqslant 8 - x + y$.

5. Ecran luminescent selon la revendication 4 caractérisé en ce que $y = 0$.

6. Ecran luminescent selon la revendication 1 ou 2, caractérisé en ce que la substance luminescente présente une composition définie par la formule

$$Me_{1-p-q}Pb_pMn_qLn_{8-r-s}Gd_rTb_s(SiO_4)_{6-x-y}(PO_4)_x(BO_4)_y\,F_{2-2c-x+y}O_{c+x-y},$$

dans laquelle

$0 \leqslant x \leqslant 2$
$0 \leqslant y \leqslant 2$
$0 \leqslant c \leqslant 1 - \frac{1}{2}x + \frac{1}{2}y$
$0{,}002 \leqslant p \leqslant 1{,}00$
$0 \leqslant q \leqslant 0{,}25$
$p + q \leqslant 1$
$0{,}25 \leqslant r$
$0 \leqslant s \leqslant 3{,}0$
$r + s \leqslant 8$.

7. Ecran luminescent selon la revendication 1 ou 2, caractérisé en ce que la substance luminescente présente une composition définie par la formule

$$Me_{3-p-q}Pb_pMn_qLn_{6-r-s}Gd_rTb_s(SiO_4)_{6-x}(PO_4)_x\ F_{4-2c-x}O_{c+x-2},$$

dans laquelle

$0 \leqslant x \leqslant 4$
$2-x \leqslant c \leqslant 2-\frac{1}{2}x$
$0 \leqslant c$
$0{,}002 \leqslant p \leqslant 1{,}00$
$0 \leqslant q \leqslant 0{,}25$
$0{,}25 \leqslant r$
$0 \leqslant s \leqslant 3{,}0$
$r+s \leqslant 6.$

8. Lampe à décharge à vapeur de mercure à basse pression munie d'un écran luminescent selon l'une des revendications 1 à 7.

**Patentansprüche**

1. Lumineszierender Schirm mit einem mit Blei oder mit Blei und zumindest einem der Elemente Terbium und Mangan aktivierten Leuchtstoff, der die hexagonale Apatit-Kristallstruktur besitzt und eine Zusammensetzung hat, die der allgemeinen Formel

$$Me_aLn_b(AO_4)_6X_2$$

entspricht, worin Me zumindest eines der Elemente Ca, Sr, Ba, Mg und Zn darstellt, wobei Mei teilweise durch Pb oder durch Pb und Mn ersetzt ist, worin Ln zumindest eines der Elemente Y und La darstellt, wobei das Tb, falls vorhanden, einen Teil des Ln ersetzt, worin $(AO_4)$ zumindest ein Anion aus der Gruppe $(PO_4)^{3-}$, $(SiO_4)^{4-}$ und $(BO_4)^{5-}$ und X zumindest ein Element aus der Gruppe Sauerstoff, die Halogene und Leerstellen darstellt, und worin $a \neq 0$, $b \neq 0$ und $9 \leqslant a+b \leqslant 10$ ist, dadurch gekennzeichnet, dass der Leuchtstoff Gadolinium enthält, wobei das Gd das Ln zumindest teilweise ersetzt.

2. Lumineszierender Schirm nach Anspruch 1, dadurch gekennzeichnet, dass der Leuchtstoff eine Zusammensetzung hat, die der Formel

$$Me_{a-p-q}Pb_pMn_qLn_{b-r-s}Gd_rTb_s(AO_4)_6X_2$$

entspricht worin

$0{,}002 \leqslant p \leqslant 1{,}0$
$0 \leqslant q \leqslant 0{,}25$
$0{,}25 \leqslant r \leqslant b-s$
$0 \leqslant s \leqslant 3{,}0.$

3. Lumineszierender Schirm nach Anspruch 1 oder 2, dadurch gekennzeichnet, dass der Leuchtstoff eine Zusammensetzung hat, die der Formel

$$Me_{10-y-p-q}Pb_pMn_qLn_{y-r-s}Gd_rTb_s(PO_4)_{6-y}(SiO_4)_yF_2$$

entspricht, worin

$0{,}25 \leqslant y \leqslant 6$
$0{,}002 \leqslant p \leqslant 1{,}00$
$0 \leqslant q \leqslant 0{,}25$
$0{,}25 \leqslant r$
$0 \leqslant s \leqslant 3{,}0$
$r+s \leqslant y.$

4. Lumineszierender Schirm nach Anspruch 1 oder 2, dadurch gekennzeichnet, dass der Leuchtstoff eine Zusammensetzung hat, die der Formel

$$Me_{2+x-y-p-q}Pb_pMn_qLn_{8-x+y-r-s}Gd_rTb_s(SiO_4)_{6-x-y}(PO_4)_x(BO_4)_yO_2$$

entspricht, worin

$0 \leqslant x \leqslant 6$
$0 \leqslant y \leqslant 6-x$, wenn $2 < x \leqslant 6$
$0 \leqslant y < 2+x$, wenn $0 \leqslant x \leqslant 2$
$0{,}002 \leqslant p \leqslant 1{,}00$
$0 \leqslant q \leqslant 0{,}25$
$p+q < 2+x-y$
$0{,}25 \leqslant r.$
$0 \leqslant s \leqslant 3{,}0$
$r+s \leqslant 8-x+y.$

5. Lumineszierender Schirm nach Anspruch 4, dadurch gekennzeichnet, dass $y=0$.

6. Lumineszierender Schirm nach Anspruch 1 oder 2, dadurch gekennzeichnet, dass der Leuchtstoff eine Zusammensetzung hat, die der Formel

$$Me_{1-p-q}Pb_pMn_qLn_{8-r-s}Gd_rTb_s(SiO_4)_{6-x-y}(PO_4)_x(BO_4)_yF_{2-2c-x+y}O_{c+x-y}$$

entspricht, worin

$0 \leqslant x \leqslant 2$
$0 \leqslant y \leqslant 2$
$0 \leqslant c \leqslant 1-\frac{1}{2}x+\frac{1}{2}y$
$0{,}002 \leqslant p \leqslant 1{,}00$
$0 \leqslant q \leqslant 0{,}25$
$p+q \leqslant 1$
$0{,}25 \leqslant r$
$0 \leqslant s \leqslant 3{,}0$
$r+s \leqslant 8.$

7. Lumineszierender Schirm nach Anspruch 1 oder 2, dadurch gekennzeichnet, dass der Leuchtstoff eine Zusammensetzung hat, die der Formel

$$Me_{3-p-q}Pb_pMn_qLn_{6-r-s}Gd_rTb_s(SiO_4)_{6-x}(PO_4)_xF_{4-2c-x}O_{c+x-2}$$

entspricht, worin

$0 \leqslant x \leqslant 4$
$2-x \leqslant c \leqslant 2-\frac{1}{2}x$
$0 \leqslant c$
$0{,}002 \leqslant p \leqslant 1{,}00$
$0 \leqslant q \leqslant 0{,}25$
$0{,}25 \leqslant r$
$0 \leqslant s \leqslant 3{,}0$
$r+s \leqslant 6.$

8. Niederdruck-Quecksilberdampfentladungslampe mit einem lumineszierenden Schirm nach einem oder mehreren der Ansprüche 1 bis 7.

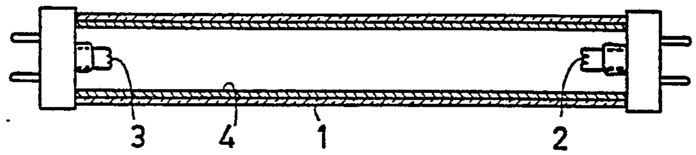


FIG.1

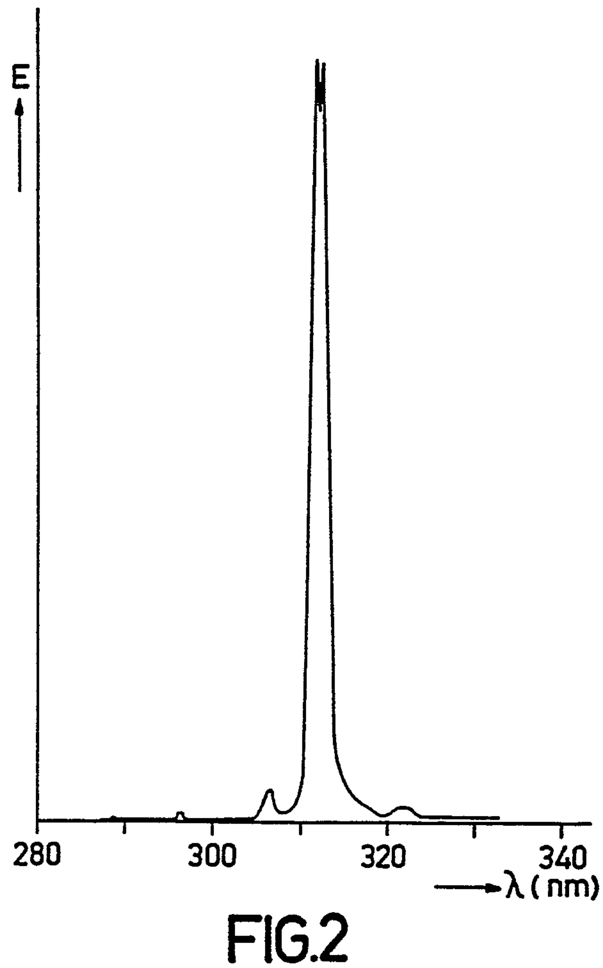


FIG.2

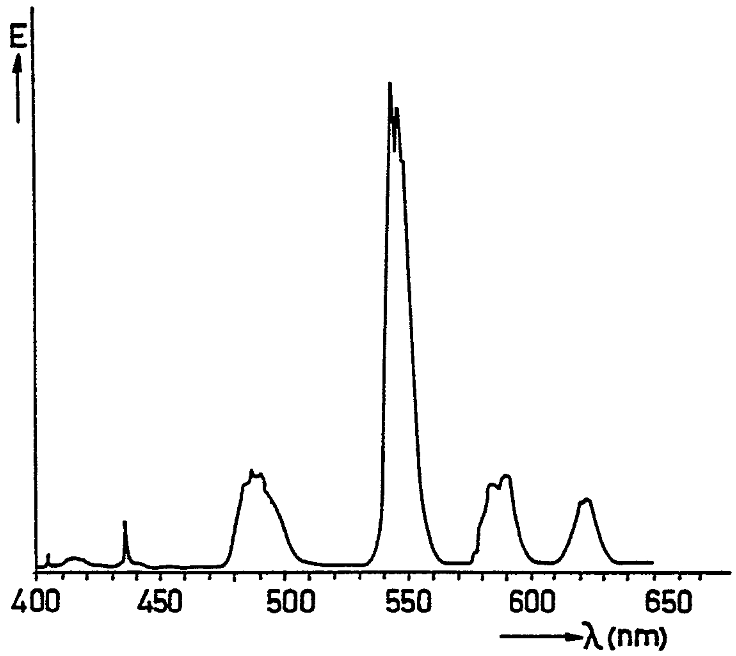


FIG.3

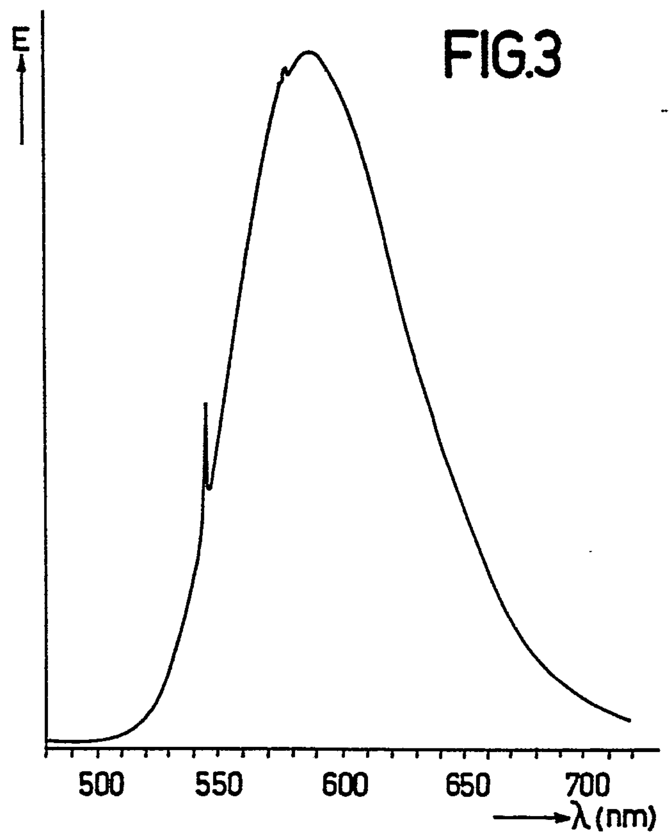


FIG.4